# EUROPEAN PATENT APPLICATION

(11) **EP 1 488 852 A1**
(43) Date of publication of application: **22.12.2004**
(21) Application number: 03023187.2
(22) Date of filing: 13.10.2003
(51) Int. Cl.: B01J 19/00, G01N 33/543, C12Q 1/68, G01N 35/10, B01L 3/02

(54) **Method for manufacturing a microarray and verifying its quality**

(30) Priority: 20.06.2003 US 465588; 20.06.2003 US
(71) Applicant: Phalanx Biotech Group, Inc., Taipei City, Taiwan 105 (TW)
(72) Inventor: Chiou, Chung-Fan, Judung Jen Hsinchu County Taiwan 310 ROC (TW); Liao, Wen-Yeh, Judung Jen Hsinchu County Taiwan 310 ROC (TW)
(74) Representative: Bublak, Wolfgang

(57) **Abstract**

Here discloses a method for manufacturing microarrays and verifying the quality of the produced microarrays at the same time. The method includes (a) providing a plurality of reagents; (b) loading the plurality of reagents on a microdispenser in a predetermined arrangement; (c) dispensing the reagents on a test array through said microdispenser, and identifying the reagents on said test array; (d) dispensing said reagents on a plurality of microarrays; and (e) taking an image through an image-recording device for checking the spots of reagents on the microarrays.

## Description

### BACKGROUND OF THE INVENTION

### 1. Field of the Invention

The present invention relates to a method for manufacturing a biochip, more particularly, to a method for manufacturing a microarray and verifying the quality and identity of contents of the microarray.

### 2. Description of Related Art

Recently microarray technology has emerged as a powerful tool in the life science and biomedical research. A microarray usually consists of a solid support (such as a glass slide, silicon wafer, and nylon- or polymer-based substrate) that contains numerous different reagents immobilized on its surface in a pre-arranged manner. These reagents (known as probes) are usually selected for their high specificity and reactivity, such as binding affinity, toward their counterparts (known as targets) found in biological samples. After applying a biological sample onto a microarray under an experimentally-controlled condition, the interactions between each probe on a microarray and its corresponding target in the biological sample can be observed through various target labeling techniques and appropriate detection instrumentation, thereby providing the microarray user with qualitative and quantitative information about the target in the tested biological sample.

As the microarray technology continues to advance, there are increasing demands toward the microarrays with high quality and consistent performance. The supply of consistent and high quality microarrays lies upon the thorough quality control processes implemented during the microarray manufacturing process. However, the quality control methods for microarray manufacturing can be substantially different depending on the methods of making the microarrays. Currently the methods of making microarrays, in particular the DNA microarray, can be classified into two categories: the *in-situ* synthesis method (see U.S. Pat. No. 5,436,327, U.S. Pat. No. 5,700,637 and U.S. Pat. No. 5,445,934) and the spotting method (see U.S. Pat. No. 5,551,487, U.S. Pat. No. 5,807,522 and U.S. Pat. No. 6,110,426). The *in-situ* synthesis method is direct synthesis of DNA probes on the surface of the microarray slide. During such a manufacturing process, tens of thousands of DNA synthesis reactions are carried out simultaneously on the solid support surface at the pre-designated positions. Since each probe is synthesized directly onto the solid surface, it impossible to directly analyze the quality and identity of each individual probe before and after the completion of the microarray production. The current practice in the field is to include the control probes for the in situ synthesis process during microarray manufacturing (see Affymetrix technical note "Manufacturing Quality Control and Validation Studies of GeneChip® Arrays"). These control probes are synthesized together with other probes on a microarray and then analyzed by hybridization with the control-specific targets. However, such quality control process can only verify the *in-situ* synthesis procedures as a whole during the manufacturing process, but not analyze the quality and identity of each individual probe on every microarray manufactured. Another quality control limitation encountered in the *in-situ* synthesis method is that no inspection procedure has been developed to ensure every designated position on the microarray surface is being occupied by a desirable probe. This is due to the probe being synthesized directly onto the microarray surface and there is no observable feature to monitor this process.

The limitations to develop quality control processes for the *in-situ* synthesis method do not apply to the spotting method for manufacturing microarray. In the spotting method, the synthesis of all the probes is accomplished first. The probes are then deposited onto the activated solid support surface by micro-volume liquid dispensers in a pre-arranged pattern (U.S. Pat. No. 5,807,522). The pre-synthesized probes will be immobilized onto the activated surface of the solid support through various molecular interactions (such as covalent bonding) depending on the properties of the solid support surface and the probes. Since the probes used in the spotting method are pre-synthesized, the quality of the probes can be verified before the dispensing process. For example, several microarray manufacturers have employed mass spectrometry to examine the probe molecular weight profile as an indication of the purity of the probe before the dispensing process. In addition, because each probe is being dispensed onto the solid support surface, a quality control process was proposed by observing each probe droplet during the dispensing process to ensure the probe will be dispensed onto the designated position on the solid support surface (see U.S. Pat. No. 5,601,890).

Though several quality control processes were applied to the spotting method for microarray manufacturing, there are still many areas that are not addressed by current practice. For example, errors can be introduced during probe synthesis and subsequent handling processes such as probe packaging, storage, as well as loading onto the dispenser. These errors, just to name a few, include incorrect probe labeling after synthesis or loading the probe into a wrong reagent reservoir of the liquid dispenser. Such errors can only be eliminated by checking the identity of the dispensed probe (for example, the partial sequence of a DNA probe) after completion of all the probe handling processes. In addition, the throughputs of the current probe dispensing monitoring systems do not provide sufficient capacity for manufacturing microarrays at a mass-production scale. For example, the probe droplet monitoring method disclosed by the previous art (U.S. Pat. No. 5,601,890) monitors only one single dispensing unit at a time, which will not provide enough throughput for large scale microarray production, especially for the high density microarrays.

A critical step for manufacturing microarrays using the spotting method is the immobilization of the probes on the solid support surface of the microarray. It is important to maintain a consistent amount of probe molecules immobilized on the designated position in every microarray manufactured in order to achieve the quality requirement of array-to-array consistency. An article published by Battaglia et. al. (2000) disclosed a method to measure the amount of DNA probes immobilized on the solid support surface. The method uses SYBR green II, a fluorescent DNA staining dye, to detect the amount of DNA probe molecules that are immobilized on the solid support surface. The disadvantage of this method is that it requires additional procedures for staining, detection, and de-staining when implemented to the microarray manufacturing process, which will significantly reduce the production capability. Thus, this published method is more suitable for lower throughput applications like data analysis of the hybridization results to eliminate the data deviation introduced by the probe immobilization variations. Therefore, a quality control procedure to ensure the probe immobilization consistency is yet to be developed in a microarray manufacturing process.

The present invention provides the quality assurance methods for the spotting microarray manufacturing process. The quality assurance methods can verify the quality and identity of probe contents in a produced microarray, can ensure that all the probes are dispensed to their designated location and a consistent amount of probe molecules being immobilized on the solid support surface during the manufacturing of microarrays.

### SUMMARY OF THE INVENTION

The purpose of the present invention is to provide quality assurance methods that, when implemented in a microarray manufacturing process, can produce microarrays with verified contents and of a consistent quality. In the subject methods, every reagent or probe included in the manufactured microarray is analyzed for its purity before being loaded onto the dispenser, wherein said reagents or probes are oligonucleotides, peptides or the derivatives thereof. The mode of micro-dispenser can be either a single nozzle for dipping or a plurality of dispensing nozzles in a matrix. The indication of the satisfactory purity of a reagent can be a narrow distribution of the molecule weight. The methods to measure the molecular weight distribution include electrophoresis, mass spectrum, high performance liquid chromatography or spectrophotometers. The purity-qualified reagents are loaded into the microarray dispenser and dispensed on a test array where the arrangement of the reagents is corresponding to the arrangement of the reagents on the microarrays to be manufactured. The reagents on the test array are subjected to an identity verification procedure. The procedure, in particular for oligonucleotides or peptides, can be using the MALDI-TOF MS to reveal the partial sequence of the probe. The partial sequence is compared to its original sequence to verify that only the correct reagents are dispensed at the designated positions on the microarrays. After completion of the dispensing process, the microarray is subjected to an image-recording devise that takes the image containing all the droplets deposited on the surface of the microarray. The image is then inspected, preferably with the help of a computer and an image analysis software, to identify any defective microarray. The defective microarrays are those that do not have all the probes being deposited at the designated positions. Microarrays without dispensing defects proceed to the immobilization process and then to a washing step that removes the un-attached reagents from the microarray surface.

The reagents used in the present invention can optionally be labeled, chemically or enzymatically, with markers that emit a signal detectable by certain instrumentation. The signal can be a fluorescent signal and the instrumentation can be a fluorescent scanning photometer. The methods of the present invention can selectively include an additional step that observes the signal intensities of markers emitted from the positions occupied by the reagents on a produced microarray after the immobilization process and the washing step. The signal intensity detected from a reagent location on the microarray is used to determine the amount of the probe molecules immobilized in the microarray surface.

Other objectives, advantages, and novel features of the invention will become more apparent from the following detailed description when taken in conjunction with the accompanying drawings.

### BRIEF DESCRIPTION OF THE DRAWINGS

Fig. 1 shows a schematic presentation of an embodiment for the probe identity verification method;
Fig. 2 shows a schematic presentation of another embodiment for the reagent identity verification method;
Fig. 3 shows a schematic presentation of an embodiment for the reagent dispensing verification method;
Fig. 4 shows a schematic presentation of an embodiment for the immobilization verification method;
Fig. 5 shows the results of the identity verification assay by MAODI-TOF MS based on the embodiment described in Figure 2;
Fig. 6 shows the images of the dispensing verification taken by the image recording device, a CCD camera; and
Fig. 7 shows the fluorescence intensity images of the immobilization verification taken by the laser-excited fluorescent scanning photometer.

### DETAILED DESCRIPTION OF THE PREFERRED EMBODIMENT

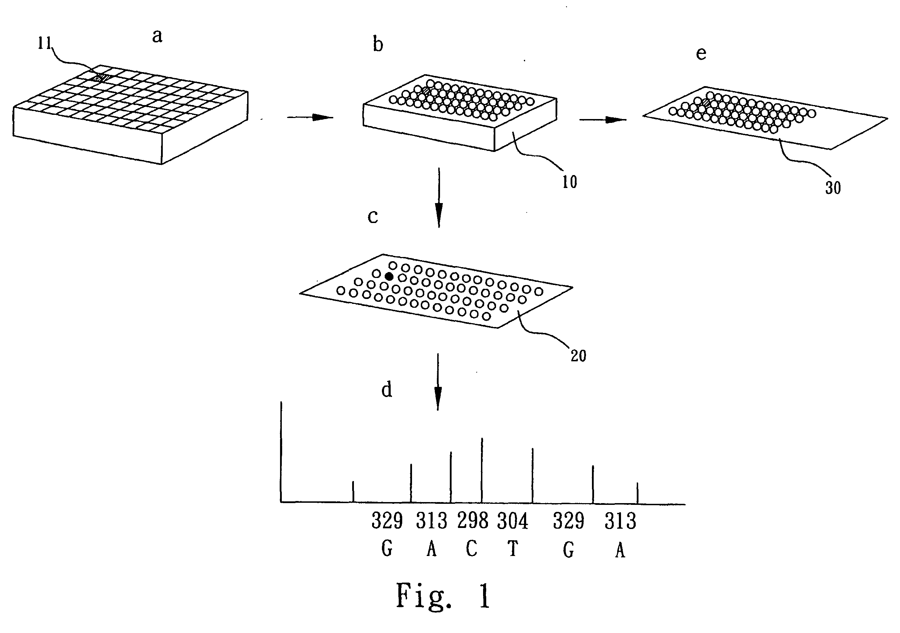

The method of the present invention provides quality assurance procedures to verify the quality and identity of the reagents or probes, the completion of a dispensing process, and the immobilization efficiency on the microarray surface during the microarray manufacturing process. The embodiment for reagents quality and identity verification includes the following steps: (a) providing a plurality of reagents; (b) analyzing the purities of said reagents; (c) loading said reagents on a microdispenser in a predetermined arrangement; (d) dispensing said reagents on a test array through said microdispenser, wherein the dispensed pattern of said reagents on said test array is corresponding to said arrangement of loading said reagents of said microdispenser; (e) identifying said reagents on said test array, then verifying whether the identities of the said reagents on said test array match the identities of the said reagents loaded into the said microdispenser. If the result of identity verification from step e. is satisfactory, the said microdispenser is then installed in the microarray production line to dispense the said reagents on a plurality of microarrays. A schematic illustration of the steps included in this embodiment is exemplified in Figure 1.

The reagents or probes in this embodiment can be any conventional reagent. Preferably, the reagents or probes are biological materials. More preferably, the reagents or probes are oligonucleotides, peptides or the derivatives thereof. In most cases, the reagents or the probes are prepared or purchased in a quantity that is enough for large batch production. The reagents are re-suspended in adequate solutions for loading into the microdispenser and dispensing onto the surface of the microarray. In the particular embodiment presented in Figure 1, the reagents are pre-synthesized oligonucleotides and the re-suspending solution is double distilled water. The final concentration of said oligonucleotide is made between 0.1 to 100 µM. The preferred concentration is 5 to 50 µM. The reagents are analyzed for their purity before being loaded to the microdispenser. The indication for a satisfactory purity of a particular reagent can be the narrow distribution of its molecular weight. The methods for measuring the molecular weight distribution include electrophoresis, mass spectrum, liquid chromatography or spectrophotometers. If the purities of the reagents are satisfactory, then the reagents will be loaded into microdispensers in a predetermined arrangement. Before being dispensed on the microarray surface, the reagents are first dispensed onto a test array, where the arrangement of the reagents is the same as the arrangement on the microarray to be produced. Therefore the reagents dispensed at a designated position on the test array will be the same as the reagents dispensed at the corresponding position on the microarray to be produced. By verifying the identity of a reagent at a designated position on the test array, the identity of the reagent at the corresponding position on the microarrays produced is also confirmed. Said test array can be a multi-well plate, a set of microtubes or a solid support.

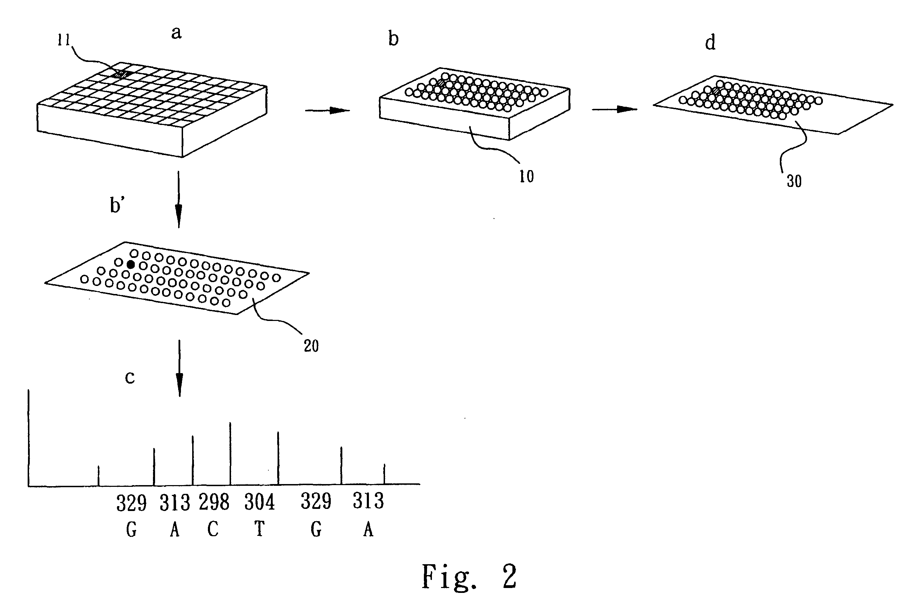

The identity of each reagent can be verified by various assays, depending on the properties of the reagents. In the embodiment presented in Figure 1, the identity of an oligonucleotide probe is verified by determining its partial sequence through Matrix-Assisted Laser Desorption Ionization Time of Flight Mass Spectrometry (MALTI-TOF). This assay for identity verification includes the following steps: (1) performing partial digestion on the oligonucleotide in the test array using Snake Venom Phosphodiesterase; (2) subjecting the digest from step (1) to MALDI-TOF MS to reveal the molecular weight distribution of the digested oligonucleotide; (3) translating the molecular weight difference between molecules of the digested probe to a string of a sequence; and (4) comparing the sequence obtained from the assay with the original sequence of the probe. Detailed information about the principle and assay condition for MALDI-TOF MS DNA sequencing can be found in the publication by Roskey M. T. et. al.(1996). The time required for MALTI-TOF MS to obtain the partial sequence of an oligonucleotide probe is very short, but the sensitivity and the accuracy of this assay are high. These advantages make this identify verification assay very suitable to be implemented in the manufacturing method for microarrays. Under certain circumstance, the assay for identity verification may not be applicable to the reagents dispensed on the test array. For example, the volume of the reagents dispensed on the test array may not be sufficient for the assay. In another example, the dispensing solution of the reagents may contain ingredients, such as salt or an organic solvent, that interfere with the accuracy of the assay. In such instance, another embodiment is proposed for reagent quality and identity verification. In this embodiment, as shown in Figure 2, the reagents are first analyzed for their purity, which is similar to the procedures carried out in the embodiment shown in Figure 1. However, after the purity verification, instead of being loaded into the microdispenser and then dispensed on a test array by the microdispenser, a small aliquot of every reagent is placed into a test array before the remaining majority of the reagent is loaded into a microdispenser. The amount of the aliquot shall be sufficient for the identity verification assay. The reagent arrangement in the test array is the same as the reagent arrangement in the microdispenser. Therefore, by verifying the identity of a reagent located in a designated position in the test array, the identity of the reagent at the corresponding position in the microdispenser is also confirmed. The dispensing movement of the microdispenser is pre-programmed and traceable. As the reagent identities in the microdispenser are verified, so are the identities of the reagents being dispensed on the surface of the microarray produced by the microdispenser.

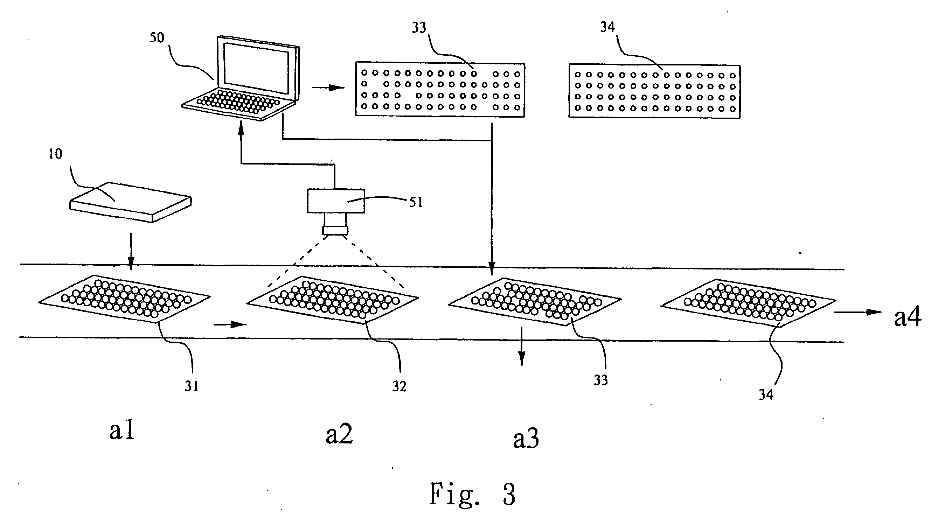

During the reagent dispensing process in the microarray manufacturing process, some problems may occur that result in reagents being dispensed at the incorrect positions or not being dispensed at all on the microarray surface. These problems include the mechanical malfunction of the manufacturing equipment and the unexpected change of. the manufacturing environment. The present invention includes an embodiment, as shown in Figure 3, for dispensing verification to ensure that all the reagents are dispensed to their designated locations on the surface of the microarray being manufactured. For each manufactured microarray, immediately after completion of dispensing all the reagents, an image-recording device installed in the microarray production line takes the image of the entire microarray surface that contains all the droplets of reagents dispensed by the microdispensers. The reagents of the present embodiment can be any conventional reagent. Preferably, the reagents are biological materials. More preferably, the reagents are oligonucleotides, peptides or the derivatives thereof. On some occasions, certain adequate dyes can also be added in the reagent solution to enhance the image recording results. The image-recording device of the present embodiment can be any conventional image-recording device. Preferably, the image-recording device is a digital camera, a charge coupled device (CCD) or a complementary metal-oxide semiconductor sensor (CMOS). The said image is inspected, preferably with the assistance from a computer equipped with an image analysis software, to verify that all the reagents were dispensed to their designated positions on the surface of the inspected microarray. If the dispensing verification result is not satisfactory, the inspected microarray will be removed from the production line and discarded. If the dispensing verification result is acceptable, the inspected microarray will proceed to an immobilization process and then a washing process to remove un-attached probe molecules from the microarray surface.

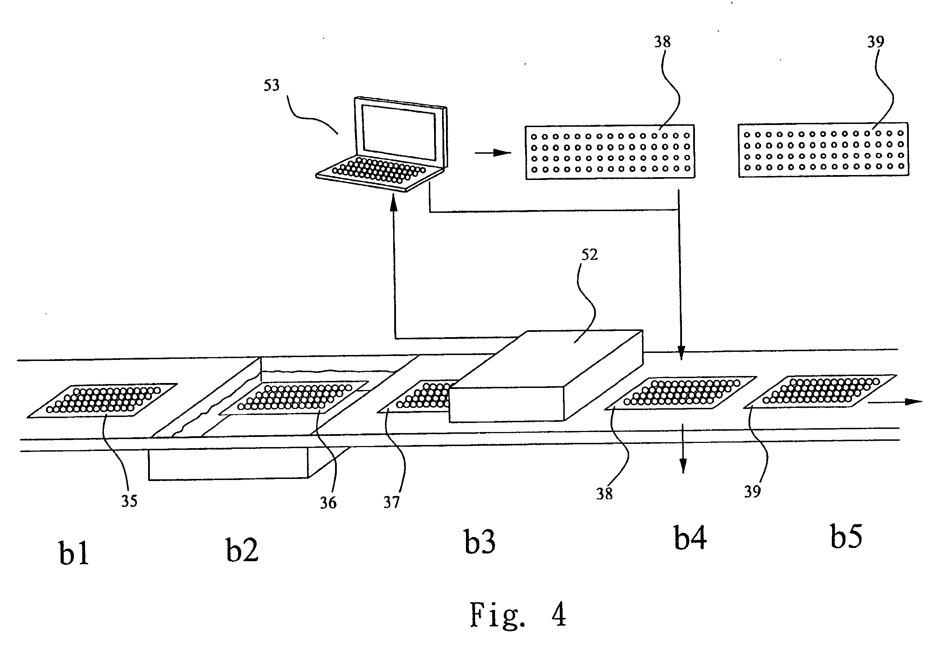

In order to achieve the quality requirement of array-to-array consistency, the present invention includes an embodiment, as shown as in Figure 4, for probe immobilization verification. The purpose of this embodiment is to maintain a consistent amount of probe molecules immobilized on the designated position in every microarray manufactured. The probes of the present embodiment can be any conventional reagent. Preferably, the reagents are biological materials. More preferably, the reagents are oligonucleotides, peptides or the derivatives thereof. The reagents used in the present invention can optionally be labeled, chemically or enzymatically, with a marker that emits a signal detectable by certain instrumentation. In this particular embodiment, the marker emits a fluorescent signal and the detection instrumentation is a laser-excited fluorescent scanning photometer. In this embodiment, the fluorescent scanner takes measures of the fluorescent signal intensities emitted from the positions occupied by the probes on the microarray surface after the microarray is processed by an immobilization process and a washing process that removes un-attached probe molecules from the microarray surface. The signal intensity detected from a probe location on the microarray is used to determine the amount of the probe molecules immobilized in the microarray surface. If the amount of the probe molecules immobilized on the produced microarray is not satisfactory, the microarray will be removed from the production line and discarded.

The method of the present invention can be applied to wide varieties of microarray or any other biochemical tool that contains reagents arranged in array format. For example, an array or microarray that contains proteins, peptides, oligonucleotides, DNAs, RNAs, or even chemicals can all implement the method of the present invention for the purpose of product quality assurance. The solid support suitable for the present invention can be any conventional solid support. Preferably, the solid support is silicon, glass, nylon, or polymer substrate.

A number of examples for illustrating the method of the present invention are listed as following.

### Example 1

Referring to Figure 1, a schematic presentation of an embodiment for the reagent identity verification method consists of the following steps: (a) providing a plurality of reagents; (b) loading the plurality of reagents 11 on a microdispenser 10 in a predetermined arrangement; (c) dispensing the reagents on a test array 20 through said microdispenser; (d) identifying the reagents on said test array 20; and (e) dispensing said reagents on a plurality of microarrays 30. In the embodiment presented in Figure 1, the reagents are pre-synthesized oligonucleotides and the re-suspending solution is double distilled water. The final concentration of said oligonucleotide probes is made between 0.1 to 100 µM. the preferred concentration is 5 to 50 µM.

### Example 2

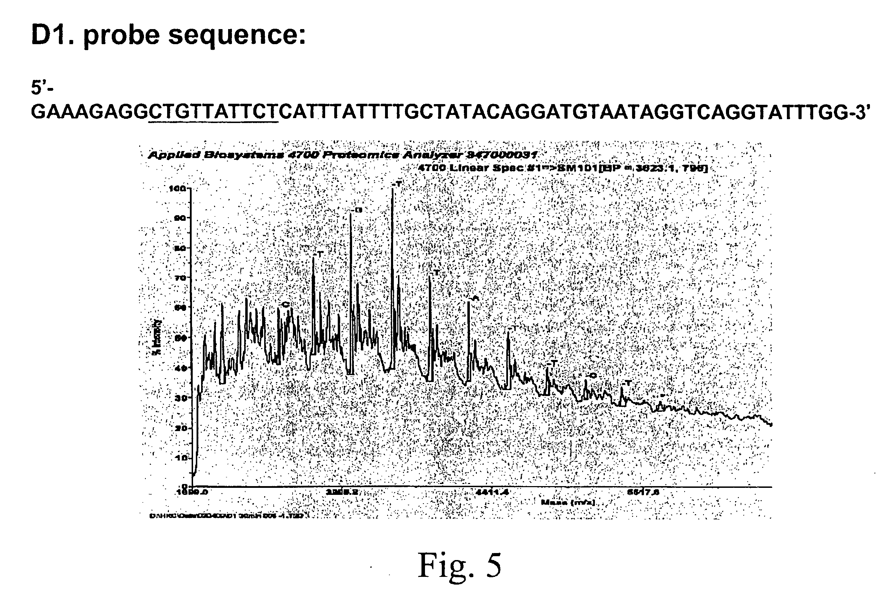

Referring to Figure 2, a schematic presentation of an embodiment for the reagent identity verification method consists of the following steps: (a) providing a plurality of reagents 11; (b) loading the plurality of reagents on a microdispenser 10 and (b') a test array 20 simultaneously in a predetermined arrangement; (c) identifying the reagents on said test array 20; (d) dispensing said reagents on a plurality of microarrays. In the embodiment presented in Figure 2, the reagents are pre-synthesized oligonucleotides that contain sixty nucleotides in length. The re-suspending solution is double distilled water. The reagents could be manually or robotically loaded onto a test array. The final concentration of said oligonucleotide probes is made between 0.1 to 100 µM. The preferred concentration is 5 to 50 µM. The volume of the reagent dispensed to the test array is 20 10µl. Figure 5 shows the identify verification result of a particular oligonucleotide probe D1 (SEQ. ID. NO.1) in the test array using MALDI-TOF MS. The original D1 sequence that the synthesis reaction of D1 oligonucleotide was based on is: 5'-GAA AGA GGC TGT TAT TCT CAT TTA TTT TGC TAT ACA GGA TGT AAT AGG TCA GGT ATT TGG-3'. The partial sequence revealed by the mass spectrum is 5'-CTG TTA TTC T-3', which matches part of the original sequence and is underlined in the D1 sequence shown in Figure 5. This result verifies that the reagent dispensed at the position designated for D1 probe in the test array is indeed D1 itself.

### Example 3

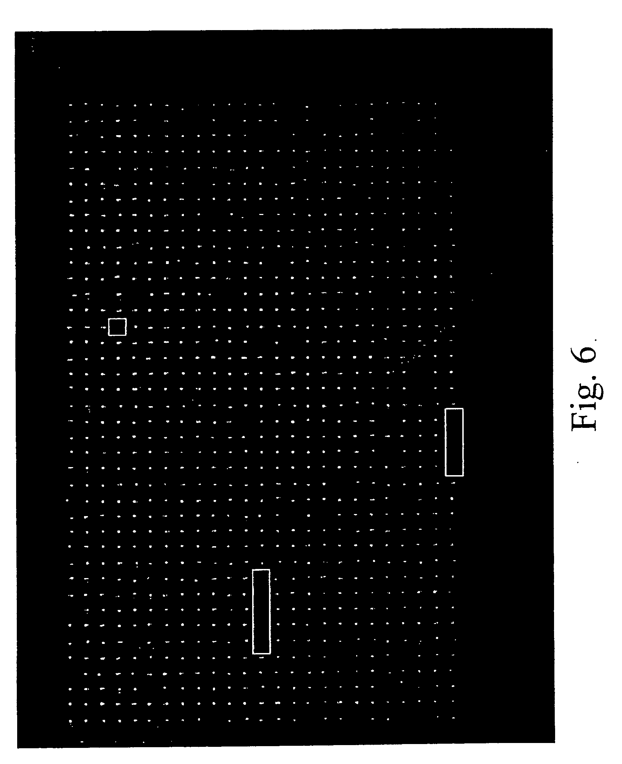

Referring to Figure 3, part of the microarray manufacturing process is shown schematically to illustrate an embodiment for the reagent dispensing verification method. Four microarrays, microarray 31, 32, 33 and 34 are at different stages of the manufacturing process: reagent dispensing a1, image recording a2, being removed from the production a3, and proceeding to reagent immobilization a4 respectively. The image of microarray 33 taken by the image recording device 51 shows four missing reagent droplets. The computer image processing software 50 detected the defect and sent a signal to the production line to discard microarray 33. No defect was detected in the image of microarray 34, therefore microarray 34 is allowed to proceed to the reagent immobilization step a4. Figure 6 shows an actual image of a microarray recording in Figure 3. The defect of the produced microarray can be easily identified (3 white square frames showed defects with no spot).

### Example 4

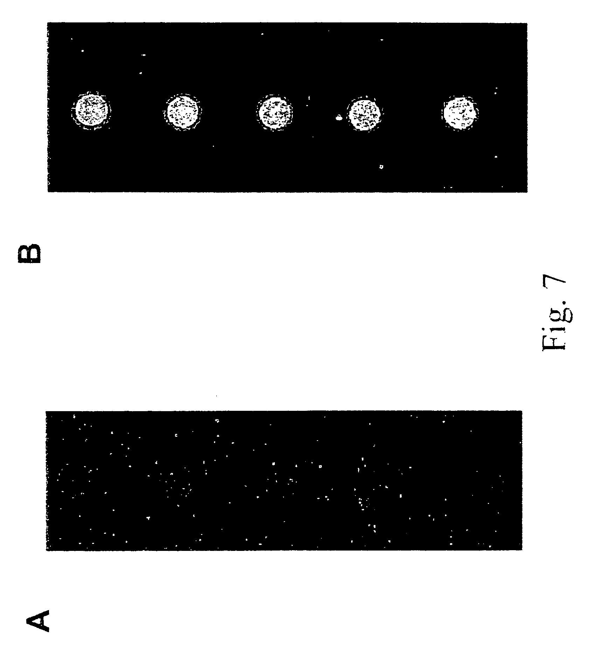

Referring to Figure 4, part of the microarray manufacturing process is shown schematically to illustrate an embodiment for the immobilization verification method. The probes used in this embodiment are labeled with a fluorescent marker that emits fluorescence detectable by the laser-excited fluorescent scanning photometer shown in Figure 4. Five microarrays, microarray 35, 36, 37, 38, and 39 are at different stages of the manufacturing process: probe immobilization b1, washing off unattached probes b2, being scanned by the laser-excited fluorescent scanning photometer b3, being removed from the production b4, and proceeding to next step of the manufacturing process b5. The fluorescent intensities detected at the probe locations on the surface of microarray 38 are lower than the required intensity, indicating an insufficient amount of the probe molecules was immobilized on the surface of microarray 38. The fluorescent signal processing software in the computer 52 detected the immobilization defect and sent a signal to the production line to discard microarray 38. The fluorescent intensity detected on the surface of microarray 39 is normal and meets the manufacturing requirement; therefore microarray b5 is allowed to proceed to the next step of the manufacturing process. In Figure 7, panel A shows a fluorescent scanning image of a microarray with low probe immobilization efficiency that is presented as microarray 38 in Figure 4. Panel B of Figure 7 shows a fluorescent scanning image of a microarray with normal probe immobilization efficiency that is presented as microarray 39 in Figure 4. The probes shown in Figure 7 are oligonucleotide probes labeled with fluorescent marker Cy3.

Although the present invention has been explained in relation to its preferred embodiments, it is to be understood that many other possible modifications and variations can be made without departing from the spirit and scope of the invention as hereinafter claimed.

## Claims

1. A method of providing a comprehensive quality assurance for a microarray manufacturing process, comprising the following steps:
a. providing a plurality of reagents;
b. loading said reagents on a microdispenser in a predetermined arrangement;
c. dispensing said reagents on a test array, wherein the dispensed pattern of said reagents on said test array is corresponding to said predetermined arrangement of said reagents in said microdispenser;
d. identifying said reagents on said test array, then verifying whether the identities of the said reagents on said test array match the identities of the said reagents loaded into the said microdispenser;
e. dispensing said reagents on a plurality of microarrays;
f. recording the image of an entire surface of said microarray by an image-recording device to inspect the droplets of the said reagents dispensed on the surface of said microarray; and
g. proceeding said microarray to an immobilization process and then a washing process to remove un-attached reagents from said microarray surface.

2. The method as claimed in claim 1, further comprising step h. observing the signal intensities of markers from locations occupied by said plurality of reagents on the surface of said microarray to evaluate an amount of the said reagents immobilized on the surface of the said microarray, wherein said markers are labeled on said reagents as they are provided in step a.

3. The method as claimed in claim 1, further comprising step a1, wherein the purity of said plurality of reagents is analyzed.

4. The method as claimed in claim 1, wherein said plurality of reagents contains biological materials.

5. The method as claimed in claim 4, wherein said biological materials are oligonucleotides, peptides or the derivatives thereof.

6. The method as claimed in claim 1, wherein said test array is a multi-well plate, a set of microtubes or a solid support.

7. The method as claimed in claim 1, wherein the order of step b and step c being carried out can be sequential, reversed, or simultaneous.

8. The method as claimed in claim 3, step a1., wherein the analysis of the purity of said provided reagents is based on the difference of molecular weight of said reagents.

9. The method as claimed in claim 8, wherein the molecular weight of said reagents is revealed by electrophoresis, mass spectrum, liquid chromatography, or spectrophotometers.

10. The method as claimed in claim 1 step d., wherein the identities of said reagents on the said test array are verified through sequencing.

11. The method as claimed in claim 10, wherein said reagents on the test array are sequenced through MALDI-TOF MS (matrix assisted laser desorption ionization time of flight mass spectrum).

12. The method as claimed in claim 10, wherein when the identity verification results are satisfactory, said microdispenser is suitable for microarray manufacturing.

13. The method as claimed in claim 1, step f., wherein said image-recording device is a CCD or a CMOS sensor.

14. The method as claimed in claim 13, wherein said image-recording device further comprising a computer equipped with an image analysis software to verify all said reagents dispensed on the surface of said microarray.

15. The method as claimed in claim 2, wherein said markers are chemically or enzymatically active moieties.

16. The method as claimed in claim 2, wherein said markers are radioactive isotopes or fluorescent chromophores.
